# EUROPEAN PATENT SPECIFICATION

(11) **EP 3 978 907 B1**
(45) Date of publication and mention of the grant of the patent: **10.06.2026**
(21) Application number: 21199729.1
(22) Date of filing: 29.09.2021
(51) Int. Cl.: G01N 21/41, G01N 21/43

(54) **REFRACTOMETER WITH SINGLE USE PRISM AND REUSABLE OPTICAL SYSTEM**
REFRAKTOMETER MIT EINWEGPRISMA UND WIEDERVERWENDBAREM OPTISCHEM SYSTEM
RÉFRACTOMÈTRE AVEC PRISME À USAGE UNIQUE ET SYSTÈME OPTIQUE RÉUTILISABLE

(30) Priority: 02.10.2020 US 202017061705
(43) Date of publication of application: 06.04.2022
(73) Proprietor: Cytiva US LLC, Marlborough, MA 01752 (US)
(72) Inventor: LIAROMMATIS, Marios, Portsmouth, P06 3PW (GB); MOSS, Nicholas, Waterlooville, P07 7NH (GB)
(74) Representative: Bedford, Grant Richard

(56) References cited:
- EP-A2- 1 126 270
- WO-A2-2008/145382
- US-A- 5 422 714
- US-A1- 2005 168 733
- US-A1- 2010 128 274
- US-A1- 2010 182 606

## Description

### BACKGROUND OF THE INVENTION

The use of a single-use system (SUS), such as, for example, biocontainer bags and the like, is becoming more widespread for biopharmaceutical applications. An SUS can be used in systems such as, bioreactors and mixing systems. Exemplary upstream SUS applications include media preparation processes such as mixing and filtration, including tangential flow filtration (TFF), for example. Examples of downstream SUS applications include chromatography concentration and diafiltration and buffer preparation, for example.

The adoption of an SUS can offer several advantages over conventional reusable stainless steel systems. Single-use technology can increase process flexibility and reduce cross contamination risks; reduce or even eliminate the need for cleaning; reduce requirements for in-house sterilization, such as by autoclaving, and cleaning chemical inventory; lower process downtime.

Process control when using an SUS can be difficult because the nature and objective of SUS can pose problems for conventional process control techniques. For example, many sensors that are typically used for conventional process control rely on physical contact to obtain a measurement. Also, it can be difficult to arrange a sensor with a container or vessel used in an SUS application, such as a bag, in such a way that an accurate measurement of a parameter of the fluid under study can be obtained.

The Index of Refraction (IoR) is used as a measurement tool, such as a concentration measurement technique for substances dissolved in liquids and for a temperature measurement technique for a given liquid. It is known to use sensors which measure the IoR in real-time and therefore they can be characterized as a process analytical technology (PAT). Conventionally, these sensors rely on a reusable design and require sterilization before use. There is a continued need in the art to provide additional solutions to enhance the evaluation and process control of fluids used within an SUS. There is a continued need in the art for single use applications related to the measurement of the IoR.

It will be appreciated that this background description has been created by the inventors to aid the reader, and is not to be taken as an indication that any of the indicated problems were themselves appreciated in the art. While the described principles can, in some aspects and embodiments, alleviate the problems inherent in other systems, it will be appreciated that the scope of the protected innovation is defined by the attached claims, and not by the ability of any disclosed feature to solve any specific problem noted herein.

US patent application US 2010/018606 A1 discloses an apparatus and method for optically measuring multiple parameters of a test sample at a regulated temperature. The test sample is held in cuvette within a sample chamber or a fluidic channel on a fluidic chip. The temperature is sensed and modulated within a desired range. Either excitation light is directed through the test sample, and the emitted light is detected by a detector which converts the detected emission light into an output signal; or a probe light is directed to the test sample and at a detector. The output signal is transmitted to the control system which converts the output signal into output data representative of the fluorescence intensity, optical density and/or refractive index of the test sample.

US patent 5,422,714 A relates to a device for quickly and accurately comparing the refractive index of an optical immersion liquid with the refractive index of a reference glass that the liquid is to be used with. The device comprises a cavity to at least partially contain the immersion liquid by the refence glass. The containment may be total, as in a hollow core, or may be between two windows composed of the reference glass and assembled in a spaced, facing relationship, one window having an inner face with a plano portion and a portion with a continuous slope, and a cavity intermediate the windows to contain the liquid being compared. The cavity is then filled with the liquid to be compared, transmitting laser light through the windows and the liquid to form an optical interference pattern. The method comprises filing the cavity in the device with the liquid being compared, allowing the unit to reach thermal equilibrium, inserting the device in the working path of an interferometer and transmitting laser light through the windows and liquid to create an optical interference pattern, measuring the optical path difference (OPD) shown by the pattern and difference in refractive index Δn from the formula Δn = OPD/ΔT, where ΔT is the depth or height of the slope in the on window.

The European patent application EP 1 126 270 A2 relates to a refractive index detector for capillary electrophoresis, consisting of a light source, a capillary to be connected to an optical cell, and a photoelectric evaluation device, wherein the optical cell is in the operational position arranged in the beam path between the light source and the photoelectric evaluation device. The optical cell has a through-channel with a triangular cross-section which can be connected to the capillary in which the substances to be analyzed will be conducted.

The international patent application WO 2008/145382 A2 relates to a device enabling a filling status to be assessed, comprising a fluid structure that can be filled with a liquid and that comprises a wall section. A light source is provided in order to direct a light beam onto the wall section of the fluid structure at such an angle that an internal total reflexion of the light beam on the wall section takes place or does not take place depending on the presence of the liquid on the wall section in the fluid structure. A detector that is configured in order to detect whether the light beam can be totally reflected internally is provided, and an assessment device that assesses the filling status based on the output signal of the detector can be provided. Subsequently, a device for producing a relative displacement between the fluid structure that comprises the wall section and the light beam is provided.

The US patent application US 2005/0168733 A1 discloses a sensitivity-enhanced flow cell for determining the differential refractive index increment of a sample fluid relative to a reference fluid. The refractometer comprises two chambers in a cell with different volumes. The sample fluid chamber is the smaller one of the two chambers and constructed such that an incident illumination beam, upon passage through the sample chamber and displacement by a partition element located there between said sample and reference chambers, passes through said reference chamber without grazing any of the confining walls or striking corners of said sensitivity-enhanced flow cell. The amount of deflection of the transmitted beam depends upon the refractive indices of the fluids relative to the transparent matter of which the containing cell is comprised, as well as the RI difference between said fluids themselves.

The US patent application US 2010/0128274 A1 relates to a total reflection illuminated sensor chip employed to detect a target substance, by: supplying a sample containing the target substance onto a detection portion formed on a surface of a dielectric prism, irradiating a measuring light beam onto the interface between the prism and the detecting portion through a transmitting surface of the prism such that conditions for total reflection are satisfied, and utilizing evanescent waves generated at the detecting portion. The sensor chip includes a protective member for protecting the transmitting surface. The protective member is provided a predetermined distance away from the transmitting surface to form a transmitting space, which is open at least toward the downward direction. The sensor chip is configured such that the interface can be irradiated by the measuring light beam that enters the transmitting space from below the transmitting space and passes through the transmitting surface.

### BRIEF SUMMARY OF THE INVENTION

The present disclosure, in one aspect, is directed to embodiments of a refractometer. In embodiments, the refractometer includes a single use prism.

The refractometer for a single use system includes an enclosure, a single use prism, a light source, and an index of refraction (IoR) sensor. The enclosure defines an interior chamber, and the single use prism is removably disposed within the interior chamber.

The single use prism includes a body made from an optically transmissive material. The body includes a light-accepting surface, a light-refracting surface, and an interface surface. The light-accepting surface and the light-refracting surface are generally planar. The interface surface defines a passage extending along a longitudinal axis through the body.

The light source is disposed within the enclosure such that the light source is configured to selectively emit light in a light path emanating from a location external to the single use prism. The light path extends from the light source through the light-accepting surface of the single use prism to the interface surface. The light path is substantially perpendicular to the light-accepting surface and to the longitudinal axis of the passage.

The IoR sensor is disposed within the interior chamber of the enclosure such that the IoR sensor is configured to detect total internal reflection light that reflects from the light path at the interface surface and passes through the light-refracting surface of the single use prism. The IoR sensor is configured to generate an IoR signal indicative of the total internal reflection light the IoR sensor detects.

The light-accepting surface and the light-refracting surface are planar and are in non-parallel relationship with each other. The first and second side surfaces are disposed in lateral spaced relationship to each other. The first and second side surfaces each include first and second side edges. The light-accepting surface extends between the first side edges of the first and second side surfaces, and the light-refracting surface extends between the second side edges of the first and second side surfaces.

The interface surface defines through the body a passage in communication with the first and second passage openings. The passage extends along a longitudinal axis between the first and second passage openings.

In another aspect, the present disclosure is directed to embodiments of techniques of using a refractometer for a single use system. The method of using a refractometer for a single use system includes using a refractometer with a single use prism.

The method of using a refractometer includes removably installing a single use prism in an interior chamber of an enclosure. The single use prism is made from an optically transmissive material. The single use prism includes a body having a light-accepting surface, a light-refracting surface, and an interface surface. The light-accepting surface and the light-refracting surface are generally planar. The interface surface defines a passage extending along a longitudinal axis though the body.

A fluid is passed through the passage of the single use prism. A light path is directed from within the interior chamber external to the single use prism through the light-accepting surface of the single use prism to the interface surface. The light path is substantially perpendicular to the longitudinal axis of the passage.

Total internal reflection light is detected from the light path that is reflected at the interface surface and passes through the light-refracting surface of the single use prism. An IoR signal indicative of the total internal reflection light detected is generated. A value of a characteristic of the fluid is determined based upon the IoR signal. The single use prism is removed from the enclosure.

Further and alternative aspects and features of the disclosed principles will be appreciated from the following detailed description and the accompanying drawings. As will be appreciated, the refractometers, the single use prisms for a refractometer, and the methods of using a refractometer for a single use system disclosed herein are capable of being carried out in other and different embodiments, and capable of being modified in various respects. Accordingly, it is to be understood that both the foregoing general description and the following detailed description are exemplary and explanatory only and do not restrict the scope of the appended claims.

### BRIEF DESCRIPTION OF THE SEVERAL VIEWS OF THE DRAWINGS

FIG. 1 is a schematic sectional view of an embodiment of a refractometer constructed in accordance with principles of the present disclosure that includes an embodiment of a single use prism constructed in accordance with principles of the present disclosure and a reusable optical system.
FIG. 2 is a schematic sectional view of another embodiment of a refractometer constructed in accordance with principles of the present disclosure that includes an embodiment of a single use prism constructed in accordance with principles of the present disclosure and a reusable optical system.
FIG. 3 is a perspective view of the refractometer of FIG. 2.
FIG. 4 is an elevational view of the single use prism of the refractometer of FIG. 2.
FIG. 5 is a perspective view of the single use prism of FIG. 4, illustrating a pair of fittings connected thereto.
FIG. 6 is an elevational view of another embodiment of a single use prism constructed in accordance with principles of the present disclosure and suitable for use in embodiments of a refractometer constructed according to principles of the present disclosure, the single use prism having a triangular shape.
FIG. 7 is a perspective view of the single use prism of FIG. 6, illustrating a pair of fittings connected thereto.

It should be understood that the drawings are not necessarily to scale and that the disclosed embodiments are illustrated diagrammatically and in partial views. In certain instances, details which are not necessary for an understanding of this disclosure or which render other details difficult to perceive may have been omitted. It should be understood that this disclosure is not limited to the particular embodiments illustrated herein.

### DETAILED DESCRIPTION OF THE INVENTION

Embodiments of a refractometer constructed in accordance with principles of the present disclosure are adapted to be used in a single use system. Embodiments of a refractometer constructed in accordance with principles of the present disclosure include a single use prism constructed according to principles of the present disclosure.

Embodiments of a refractometer constructed in accordance with principles of the present disclosure can provide a simple arrangement for index of refraction (IoR) measurement in single use systems by using a single use polymeric block, being made from an optically transmissive material and defining a flow passage therethrough. The single use polymeric block comprises a prism which can be interfaced with a reusable optical system including a light source and an IoR sensor to detect changes in refractive index of a fluid in the flow passage depending on the total internal reflection (TIR) angle.

The fluid under study can be isolated from the optical system such that the fluid passes through the flow passage of the single use prism without coming into contact with the components of the optical system. As such, the components of the optical system need not be sterilized prior to using the refractometer. In embodiments, the single use prism can be sterilized when separated from the optical system such that the optical system need not be exposed to the sterilizing environment.

The single use prism constructed according to principles of the present disclosure can be sterilized prior to use, such as by being sterilized via gamma irradiation. In embodiments, the body of the single use prism is made from a material that can withstand being irradiate to sterilize the single use prism yet remain optically transmissive after being irradiated.

The method of using a refractometer following principles of the present disclosure can be used in a variety of applications. For example, in embodiments, a refractometer constructed in accordance with principles of the present disclosure can be used to detect concentration measurements of biological fluids, to identify IoR differences over time to help determine whether process conditions have changed, to identify a fluid, and to determine density and/or temperature of a given fluid.

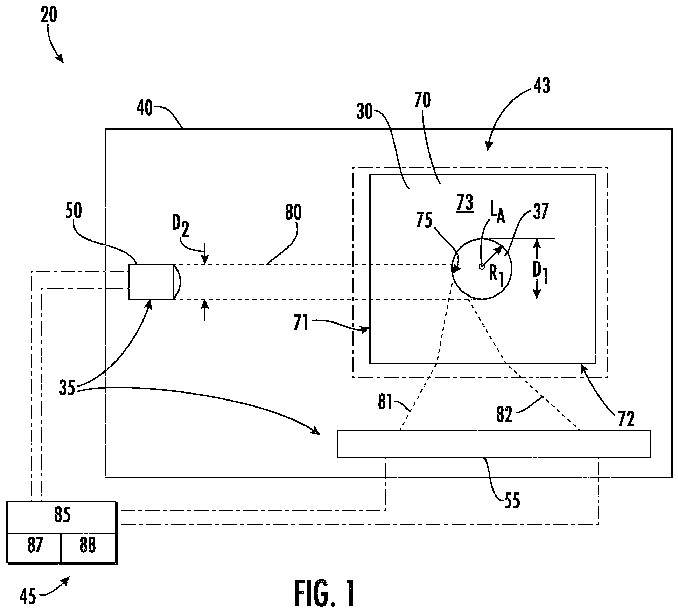

Turning now to the FIGURES, there is shown in FIG. 1 an embodiment of a refractometer 20 constructed in accordance with principles of the present disclosure that includes a single use prism 30 constructed in accordance with principles of the present disclosure and an optical system 35 that is reusable. The refractometer 20 can be configured to be used as part of a SUS application. The refractometer 20 can include a single-use, optically transmissive prism 30 constructed in accordance with principles of the present disclosure that defines a flow passage 37 therethrough. The single use prism 30 can be interfaced with a reusable optical system 35 to detect refractive index differences in a fluid passing through the flow passage 37 defined in the single use prism 30. The illustrated refractometer 20 is configured to receive different single use prisms 30 for single use applications with the reusable optical system 35. The single use prism 30 is adapted to be sterilized before being installed in the refractometer 20. In embodiments, after use, the single use prism 30 can be replaced with another single use prism 30 of substantially the same construction which has been previously sterilized. In other embodiments, a single use prism with a different configuration can be installed in the refractometer 20 with any corresponding adjustment of the optical system 35 to provide the intended measuring capability via refractive index of a light path shown through the fluid passage of the second single use prism.

Referring to FIG. 1, in the illustrated embodiment, the refractometer 20 for a single use system includes an enclosure 40, a single use prism 30, the optical system 35, and a control unit 45. In the illustrated embodiment, the optical system 35 includes a light source 50 and an index of refraction (IoR) sensor 55.

The enclosure 40 defines an interior chamber 43. The single use prism 30 is removably disposed within the interior chamber 43 of the enclosure 40. The light source 50 and the IoR sensor 55 can be housed within the interior chamber of the enclosure 40. The light source 50 and the IoR sensor 55 are mounted within the interior chamber 43 of the enclosure 40 using any suitable technique (e.g., mechanical and/or adhesive techniques), as will be appreciated by one skilled in the art.

The enclosure 40 can include suitable structure adapted to receive a complementary mounting portion of the single use prism 30 to removably mount the single use prism 30 within the interior chamber 43 of the enclosure 40 in a predetermined location and orientation to facilitate its use with the optical system 35. In embodiments, different single use prisms 30 having mounting portions of similar construction can each be separately removably mounted within the enclosure 40 in a similar manner for repeatable use of the refractometer 20, each time with one of the different single use prisms 30. One skilled in the art will appreciate that a number of different mounting techniques can be used in different embodiments of the enclosure 40 and the single use prism 30 (e.g., snap-in mounting tabs, sliding locking levers, twist knobs, threaded fasteners, adhesive, locking key-and-socket, etc.).

The interior chamber 43 of the enclosure 40 can have any suitable medium therein, such as air, for example. In embodiments, air can diffuse through the interior chamber 43 of the enclosure 40 such that air is interposed between the components of the optical system 35 and the single use prism 30. In other embodiments, the interior chamber 43 of the enclosure 40 can be filled with a suitable medium other than air, as will be appreciated by one skilled in the art.

In embodiments, the enclosure 40 comprises a reusable component which can be serially used with a plurality of single use prisms 30 for a variety of SUS applications. The enclosure 40 can be constructed such that it need not be sterilized prior to being used in the SUS application (the fluid under study coming into contact with only the single use prism (and any fittings connected thereto) of the refractometer 20.

The single use prism 30 is configured to be used in a SUS application. The single use prism 30 is removably mounted within the interior chamber 43 of the enclosure 40. In embodiments, suitable fittings can be mounted to the single use prism 30 to permit the flow passage 37 to be placed in fluid communication with a fluid for study within the refractometer 20. The openings of the fittings can be accessible from the exterior of the enclosure 40 via suitable openings defined in the enclosure 40 to permit fluid flow into the flow passage 37 of the single use prism 30 from outside of the refractometer 20 and fluid flow out of the flow passage 37 of the single use prism 30 and out of the refractometer 20.

In the illustrated embodiment, the single use prism 30 is removably disposed within the interior chamber 43 of the enclosure 40 such that the light source 50 is disposed in non-contacting relationship with the single use prism 30 and is disposed in non-contacting relationship with the IoR sensor 55. In embodiments, the separation between one or both of: (1) the light source 50 and the single use prism 30, and (2) the IoR sensor 55 and the single use prism 30, can be varied. Disposing the single use prism 30 in non-contacting relationship with the components of the optical system 35 can help by allowing the components of the optical system 35 to not be sterilized before using the refractometer 20 with a sterilized single use prism 30 and yet maintain a sterile flow path through the refractometer 20 via the single use prism 30.

The single use prism 30 includes a body 70 made from an optically transmissive material. The body 70 includes a light-accepting surface 71, a light-refracting surface 72, first and second side surfaces (only the first side surface 73 being shown in FIG. 1), and an interface surface 75. The light-accepting surface 71 and the light-refracting surface 72 are generally planar and are in non-parallel relationship with each other. The side surfaces 73 are generally rectangular and are in spaced lateral relationship with each other along a longitudinal axis LA to establish the thickness of the body 70 and the dimensions of the light-accepting surface 71 and the light-refracting surface 72.

The interface surface 75 defines the flow passage 37, which extends along a longitudinal axis LA through the body 70. The flow passage 37 of the single use prism 30 is generally cylindrical and has a passage radius R₁ and a passage diameter D₁.

In embodiments, at least the light-accepting surface 71, the light-refracting surface 72, and the interface surface 75 of the body 70 are machined and polished for use as an optical prism. For example, in embodiments, the light-accepting surface 71, the light-refracting surface 72, and the interface surface 75 of the body 70 of the single use prism 30 each has a surface finish value equal to or less than 0.1 Ra µm.

In embodiments, the single use prism 30 is made from a suitable material with optical clarity suitable for use as a prism. In embodiments, the single use prism 30 is made from a suitable material with the ability to withstand a sterilization process and still remain suitable for use as a prism. For example, in embodiments, the body 70 of the single use prism 30 is optically transmissive after the single use prism 30 is sterilized by being irradiated. For example, in embodiments, the prism 30 is made from a suitable material with the ability to withstand gamma irradiation of sterilization doses typical of the intended application (e.g., ~25-50 kGy) without affecting properties of the body 70 that would make it unsuitable for its intended purpose as a prism.

In embodiments, the prism 30 is made from a material having an Index of Refraction (IoR) higher than the IoR of the fluid (or fluids) intended to be evaluated using the refractometer 20. In embodiments, the single use prism 30 is made from a material having a refractive index (RI) higher than the RI of the fluid (or fluids) intended to be evaluated using the refractometer 20.

In embodiments, the single use prism 30 is made from an optically transmissive material comprising a suitable polymer, such as, for example, polycarbonate (PC), acrylic (PMMA), polyethylene terephthalate glycol (PETG), polysulfone, and polyetherimide (PEI). In embodiments, the single use prism 30 is made from an optically transmissive material comprising a suitable polymeric material meeting USP Class VI regulatory requirements for polymers that are in contact with biopharmaceutical fluids, such as, for example, PC and PEI.

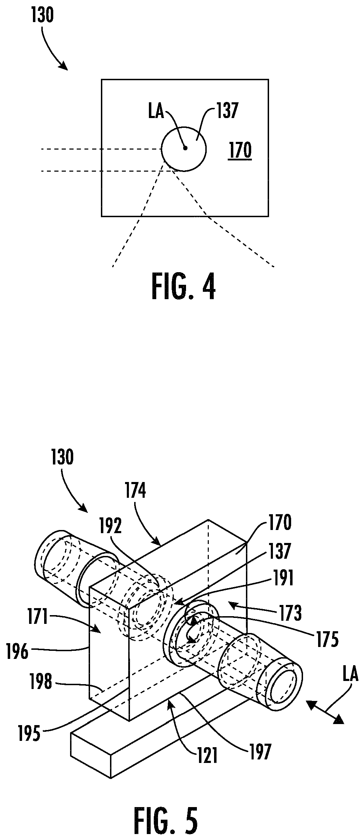

In embodiments, the single use prism 30 can have any shape that is suitable for use as a prism for the IoR sensor 55 and through which the fluid under study passes. Examples of suitable shapes for the body 70 of the single use prism 30 include rectangular (*see, e.g.,* FIGS. 4 and 5) or triangular (*see, e.g.,* FIGS. 4 and 5) blocks. In embodiments, the single use prism 30 can be any suitable size. For example, in embodiments, the size of the single use prism 30 can be scaled-up and/or scaled-down as appropriate to allow IoR measurements using different sizes of the flow passage 37 depending upon desired volumetric flow rate.

The light source 50 comprises any suitable light source for producing reflection-type interaction with the fluid passing through the flow passage 37 of the prism 30 depending upon the properties of the fluid. In embodiments, the light source 50 is adapted to emit light comprising monochromatic wavelength light. In embodiments, the light source 50 comprises a light emitting diode, such as, a monochromatic laser diode for example. For example, in embodiments, the light source 50 comprises a monochromatic laser module adapted to emit a collimated laser beam. In embodiments, the light source 50 can comprise a different monochromatic wavelength light source.

In embodiments, the light source 50 is mounted within the enclosure 40 and is in operative arrangement with the control unit 45 such that the control unit 45 can selectively operate the light source 50. In the illustrated embodiment, the light source 50 is disposed within the enclosure 40 such that the light source 50 is disposed in spaced, non-contacting relationship with the single use prism 30 removably mounted within the interior chamber 43 of the enclosure 40. In embodiments, the distance between the light source 50 and the single use prism 30 can be varied. In embodiments, the light source 50 is disposed within the enclosure 40 such that the light source 50 is configured to selectively emit light in a light path 80 that emanates from a location external to the single use prism 30. The light path 80 extends from the light source 50 through the light-accepting surface 71 of the single use prism 30 to the interface surface 75.

The light source 50 is arranged with respect to the light-accepting surface 71 of the single use prism 30 such that the light path 80 from the light source 50 enters the prism 30 with minimal or insignificant light bending such that the prism 30 operates effectively to redirect light to the IoR sensor 55 depending upon the properties of the fluid passing through the flow passage 37. The light source 50 is arranged with respect to the single use prism 30 such that the light path 80 is substantially perpendicular to the light-accepting surface 71 and to the longitudinal axis LA of the flow passage 37. In embodiments, the light rays comprising the light path 80 travel perpendicularly from the light source 50 and through the air medium within the interior chamber 43 of the enclosure 40 through the light-accepting surface 71 of the prism 30 to the interface surface 75, at which surface 75 the light rays are refracted or total internally reflected depending on the IoR of the fluid passing through the flow passage 37.

In the illustrated embodiment, the light source 50 is arranged with the flow passage 37 of the single use prism 30 to produce a reflection-type geometry with the light path 80 of the light source 50 and the fluid passing through the flow passage 37 of the prism 30. The light path 80 of the light source 50 is generally cylindrical with a path diameter D₂ that is less than the diameter D₁ of the flow passage 37 of the prism 30. The diameter D₂ of the light path 80 of the light source 50 is nominally equal to the radius R₁ of the flow passage 37 of the prism 30.

The IoR sensor 55 is disposed within the interior chamber 43 of the enclosure 40 such that the IoR sensor 55 is configured to detect a range 81, 82 of light that reflects from the light path 80 at the interface surface 75 and passes through the light-refracting surface 72 of the single use prism 30. The IoR sensor is configured to generate an IoR signal indicative of the total internal reflection light the IoR sensor detects. In embodiments, the IoR sensor 55 is mounted within the enclosure 40 and is in operative arrangement with the control unit 45 such that the control unit 45 can selectively operate the IoR sensor 55 and can receive an IoR signal from the IoR sensor indicative of the total internal reflection light the IoR sensor 55 detects based upon the range 81, 82 of light reflected from the interface surface 75.

In embodiments, the IoR sensor 55 is positioned in a way to detect the whole range 81, 82 of expected distributions of light reflected from the interface surface 75 and through the light-refracting surface 72 of the single use prism 30 based upon the range of different fluids intended to be evaluated with the refractometer 20. In embodiments, the IoR sensor 55 is positioned substantially parallel to the light-refracting surface 72 of the prism 30.

The IoR sensor 55 is adapted to generate an IoR signal indicative of the refractive index of the fluid passing through the flow passage 37 of the single use prism 30 by means of the total reflection of light from the light path 80 created at the interface surface 75 of the single use prism 30, which comprises an optical window, and the fluid passing through the flow passage 37 of the single use prism 30. In use, a beam of rays is emitted from the light source 50 in the form of the light path 80 directed to the interface surface 75 between the optical window (the prism 30) and the fluid passing through the flow passage 37. Part 81, 82 of the beam of rays of the light path 80 is reflected entirely from the fluid passing through the flow passage 37, and part of the beam of rays of the light path 80 is absorbed into the fluid. In embodiments, the IoR sensor 55 can be configured to receive the reflected portion 81, 82 thereupon such that a light image is received in which the location of a borderline between a light area and a dark area depends on the critical angle of the total reflection and thus on the refractive index of the fluid passing through the flow passage 37. In embodiments, the IoR sensor 55 is configured to transmit an IoR signal indicative of the refractive index of the fluid passing through the flow passage 37.

In embodiments, the IoR sensor 55 comprises any suitable IoR sensor for detecting the total reflection from the light path 80 after interacting with the fluid passing through the fluid passage 37 of the single use prism 30 depending upon the properties of the fluid. In embodiments, the IoR sensor 55 comprises a linear optical array positioned substantially parallel to the light-refracting surface 72 of the single use prism 30. In embodiments, the IoR sensor 55 can comprise a charge-coupled device (CCD) camera.

In embodiments, the IoR sensor 55 comprises an optical detector in the form of a pixel array. The pixel array can be adapted to receive reflected/refracted light from the prism 30, and the IoR sensor 55 can be adapted to acquire the raw light data set from the pixel array and to translate that data into the IoR signal transmitted to the control unit 45.

In embodiments, measures are taken to reduce the incidence of fluctuations of fluid temperature and prism temperature that could affect the measurement capabilities of the refractometer 20. In embodiments, temperature dependency can be reduced by thermostating the fluid. In embodiments, temperature dependency can be reduced by being compensated via a suitable compensation formula, as one skilled in the art would appreciate.

In embodiments, the control unit 45 can be any suitable controller configured to operate the components of the optical system 35 as will be readily understood by one skilled in the art. In embodiments, the control unit 45 includes a processor 85 and a non-transitory computer readable medium 87 bearing an IoR program. The control unit 45 is in electrical communication with both the light source 50 and the IoR sensor 55 and is adapted to selectively operate them both. The processor 85 is in electrical communication with the IoR sensor 55 to receive the IoR signal therefrom. The processor 85 is programmed with the IoR program.

In embodiments, the IoR program includes a characteristic determination module configured to determine a value of a characteristic of a fluid passing through the flow passage 37 of the single use prism 30 based upon the IoR signal. In embodiments, the IoR program is configured to use the IoR signal from the IoR sensor 55 to calculate the refractive index and/or the concentration of the target fluid passing through the flow passage 37 of the single use prism 30.

In embodiments, the control unit 45 can include a data storage device 88 including data configured to be used by the IoR program. For example, in embodiments the data storage device 88 can include IoR data useful for helping the IoR program perform a variety of tasks as will be appreciated by one skilled in the art, such as, identifying the fluid passing through the flow passage of the single use prism, determining whether the IoR values being transmitted from the IoR sensor are within a predetermined tolerance range for the given fluid passing through the single use prism 30, determining the concentration measurement of a substance in the fluid, tracking IoR differences over time to help determine whether process conditions have changed, and determining density and/or temperature of a given fluid.

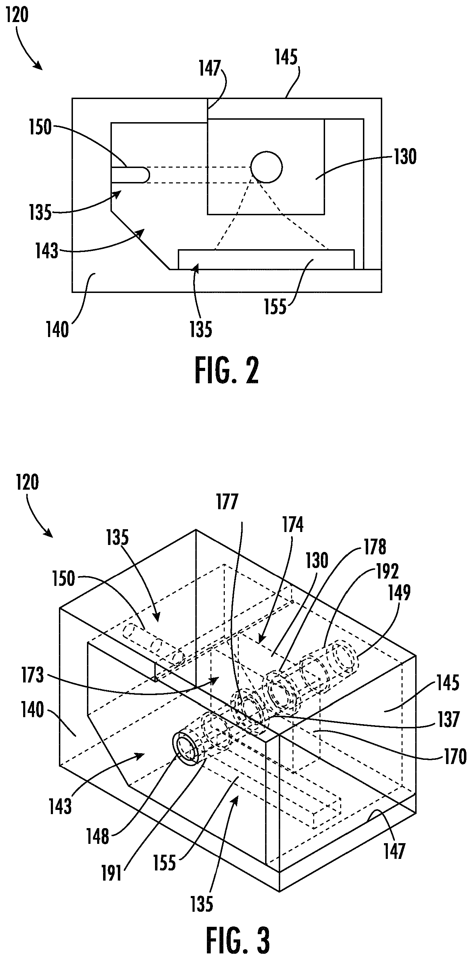

Referring to FIGS. 2 and 3, another embodiment of a refractometer 120 constructed in accordance with principles of the present disclosure is shown. The refractometer 120 of FIGS. 2 and 3 includes a rectangular-shaped, single use prism 130 and an enclosure 140 having a removable cover 145 that is configured to help index the single use prism 130 with respect to the optical system 135, which includes a light source 150 and an IoR sensor 155.

The enclosure 140 defines a prism opening 147 and first and second sample ports 148, 149. The prism opening 147 and the first and second sample ports 148, 149 are each in communication with the interior chamber 143 of the enclosure 140. The removable cover 145 is configured to occlude the prism opening 147 when the cover 145 is mounted to the enclosure 140. The prism opening 147 is sized to permit an operator access to the interior chamber 143 of the enclosure 140, such as, for adjusting the components of the optical system 135, for example. The removable cover 145 includes structure for removably mounting the single use prism 130. The removable cover 145 can be indexingly mounted to the enclosure 140 in such a way that each single use prism 130 serially mounted to the cover 145 is positioned within the interior chamber 143 of the enclosure 140 in a repeatable position with respect to the optical system 135.

Referring to FIG. 3, the single use prism 130 includes first and second side surfaces 173, 174 that define first and second passage openings 177, 178 that are in communication with the flow passage 137 defined by the interface surface 175. The single use prism 130 includes first and second fittings 191, 192 attached to the first and second side surfaces 173, 174 of the body 170 such that the first and second fittings 191, 192 are respectively disposed in communication with the first and second passage openings 177, 178 to fluidly connect the first and second fittings 191, 192 to each other though the flow passage 137 of the single use prism. The first and second fittings 191, 192 are respectively connected to the first and second sample ports 148, 149 defined in the enclosure 140 such that the first and second fittings 191, 192 can be accessible from the exterior of the enclosure 140 via the first and second sample ports 148, 149 to fluidly connect a supply of fluid under study to one of the sample ports 148, 149 for passing the fluid through the flow passage 137 of the single use prism 137 and to fluidly connect a reservoir or other means for holding the fluid to the other of the sample ports 148, 149 for receiving the fluid passed through the flow passage 137 of the single use prism after being evaluated within the refractometer 120.

The refractometer 120 of FIGS. 2 and 3 is similar in other respects to the refractometer 20 of FIG. 1 with respect to its construction and operation. For example, the optical system 135 of the refractometer 120 of FIGS. 2 and 3 has the same construction as the optical system 35 the refractometer 20 of FIG. 1, and operates in the same manner.

Referring to FIGS. 4 and 5, the single use prism 130 of the refractometer 120 of FIGS. 2 and 3 is shown. The illustrated single use prism 130 has a rectangular-shaped body 170 with a flow passage 137 having a circular cross-sectional shape along a cross-section taken perpendicular to the longitudinal axis LA of the flow passage 137. The single use prism 130 includes a body 170 made from an optically transmissive material.

Referring to FIG. 5, the body 170 includes a light-accepting surface 171, a light-refracting surface 172, first and second side surfaces 173, 174, and an interface surface 175. The light-accepting surface 171 and the light-refracting surface 172 are generally planar and are in non-parallel relationship with each other. In the illustrated embodiment, the light-accepting surface 171 and the light-refracting surface 172 are substantially perpendicular to each other as part of the rectangular shape of the body 170. In the illustrated embodiment, the light-accepting surface 171 and the light-refracting surface 172 each are rectangular shaped.

The first and second side surfaces 173, 174 are rectangular and are disposed in lateral spaced relationship to each other along the longitudinal axis LA. The first and second side surfaces 173, 174 each includes first and second side edges 195, 196; 197, 198. The light-accepting surface 171 extends between the first side edges 195, 196 of the first and second side surfaces 173, 174. The light-refracting surface 172 extends between the second side edges 196, 198 of the first and second side surfaces 173, 174. The first and second side surfaces 173, 74 respectively define the first and second passage openings 191, 192.

The interface surface 175 defines the flow passage 137 through the body 170 which is in communication with the first and second passage openings 191, 192. The flow passage 137 extends along the longitudinal axis LA between the first and second passage openings 191, 192.

In embodiments, the single use prism 130 of FIGS. 4 and 5 can be similar in other respects to the single use prism 30 of FIG. 1 regarding its construction and/or operation.

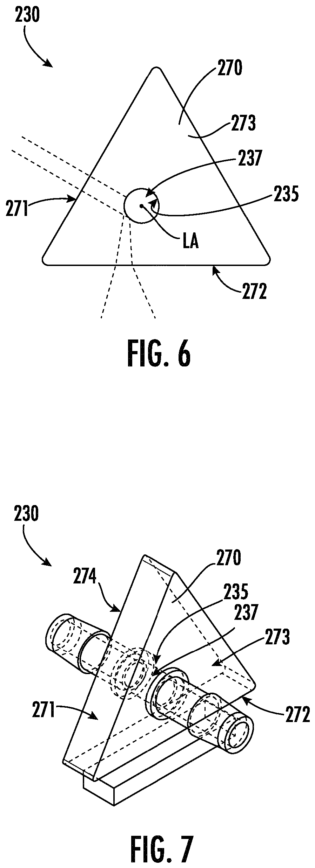

Referring to FIGS. 6 and 7, another embodiment of a single use prism 230 constructed in accordance with principles of the present disclosure is shown, which is suitable for use in embodiments of a refractometer constructed according to pricinples of the present disclosure. The illustrated single use prism 230 has a triangular-shaped body 270 with a flow passage 237 having a circular cross-sectional shape along a cross-section taken perpendicular to the longitudinal axis LA of the flow passage 237. The single use prism 230 includes a body 270 made from an optically transmissive material.

Referring to FIG. 7, the body 270 includes a light-accepting surface 271, a light-refracting surface 272, first and second side surfaces 273, 274, and an interface surface 275. The light-accepting surface 271 and the light-refracting surface 272 are generally planar and are in non-parallel relationship with each other. In the illustrated embodiment, the light-accepting surface 271 and the light-refracting surface 272 are at a nominal sixty degree internal angle with respect to each other as part of the equilateral triangular shape of the body 270. In the illustrated embodiment, the light-accepting surface 271 and the light-refracting surface 272 each are rectangular shaped. The interface surface 275 defines the flow passage 237.

The first and second side surfaces 273, 274 are triangular and are disposed in lateral spaced relationship to each other along the longitudinal axis LA. In embodiments, the single use prism 230 of FIGS. 6 and 7 can be similar in other respects to one or both of the single use prism 30 of FIG. 1 and the single use prism 130 of FIGS. 4 and 5, including regarding their construction and/or operation.

In other embodiments of a refractometer constructed in accordance with principles of the present disclosure, the refractometer construction can take alternative forms. For example, in embodiments, the enclosure can have a different configuration. In other embodiments, the refractometer can include a single use prism having a different shape. In embodiments, the optical system of the refractometer can include different components as will be appreciated by one skilled in the art.

In embodiments of a method of using a refractometer following principles of the present disclosure, a refractometer constructed according to principles of the present disclosure is used to carry out an application using a single use prism of the refractometer as discussed herein. In embodiments, a method of using a refractometer following principles of the present disclosure can be used with any embodiment of a refractometer according to principles discussed herein, which can include an embodiment of a single use prism constructed according to principles of the present disclosure.

In embodiments of a method of using a refractometer following principles of the present disclosure, a single use prism constructed according to pricinples of the present disclosure is sterilized such as, for example, by being gamma irradiated to a typical sterilization dose (~50 kGy). In embodiments, suitable fittings are mounted to the single use prism prior to it being sterilized. After being sterilized, the single use prism is aseptically installed into a single-use manifold through fittings.

An optical system including a light source and an IoR sensor mounted in an enclosure can be positioned to allow measurement. The sterilized single use prism can be removably attached to the enclosure and calibration/measurements can be conducted. The enclosure and optical system are intended to be re-useable, and do not require sterilization inasmuch as the fluid passing through the single use prism does not come into contact with these components.

The incident light rays from the light source pass perpendicularly through the light accepting surface of the single use prism. As the light rays travel through the single use prism, they strike the sensing interface surface, which defines the flow passage through the single use prism, and at least a portion of the light rays from the light source are internally reflected inside the prism based on the IoR of the fluid passing through the flow passage. The reflected light rays are refracted as they pass through the light-refracting surface of the single use prism into the medium within the interior chamber of the enclosure (e.g., air). The light passing out of the single use prism from the light-refracting surface is detected by the IoR sensor which transmits an IoR signal to the control unit indicate of the IoR of the fluid passing through the flow passage of the single use prism.

In one embodiment, a method of using a refractometer for a single use system includes removably installing a single use prism in an interior chamber of an enclosure. The single use prism is made from an optically transmissive material. The single use prism includes a body having a light-accepting surface, a light-refracting surface, and an interface surface. The light-accepting surface and the light-refracting surface are generally planar. The interface surface defines a passage extending along a longitudinal axis though the body.

In embodiments, the single use prism is sterilized by any suitable technique, such as by irradiating the single use prism, prior to removably installing the single use prism in the interior chamber of the enclosure. In embodiments, the single use prism is optically transmissive after the single use prism is sterilized by being irradiated.

A fluid is passed through the passage of the single use prism. A light path is directed from within the interior chamber external to the single use prism through the light-accepting surface of the single use prism to the interface surface. The light path is substantially perpendicular to the longitudinal axis of the passage.

Total internal reflection light is detected from the light path that is reflected at the interface surface and passes through the light-refracting surface of the single use prism. An IoR signal indicative of the total internal reflection light detected is generated. A value of a characteristic of the fluid is determined based upon the IoR signal. In embodiments, the fluid is passed through the single use prism such that the fluid does not contact the components used to generate the light path or to detect total internal reflection.

The single use prism is removed from the enclosure. In embodiments, a second single use prism is sterilized by irradiating the second single use prism. The second single use prism is a separate component from the first single use prism, but constructed in the same manner as the first single use prism. After being sterilized, the second single use prism is removably installed in the interior chamber of the enclosure. And, the evaluation steps are repeated again with refractometer having the second single use prism installed therein using the same components for generating the light path and detecting the total internal reflection.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

## Claims

1. A refractometer (20) for a single use system, the refractometer (20) comprising:
an enclosure (40), the enclosure (40) defining an interior chamber (43);
a single use prism (30), the single use prism (30) removably disposed within the interior chamber (43) of the enclosure (40), the single use prism (30) including a body (70) made from an optically transmissive material, the body (70) including a light-accepting surface (71), a light-refracting surface (72), and an interface surface (75), the light-accepting surface (71) and the light-refracting surface (72) being generally planar, the interface surface (75) defining a generally cylindrical passage (37) extending along a longitudinal axis (LA) through the body (70), said passage having a passage radius (R₁);
a light source (50), the light source (50) disposed within the enclosure (40) such that the light source (50) is configured to selectively emit light in a light path (80) emanating from a location external to the single use prism (30), the light path (80) extending from the light source (50) through the light-accepting surface (71) of the single use prism (30) to the interface surface (75), the light path (80) having a path diameter (D₂) and being substantially perpendicular to the light-accepting surface (71) and to the longitudinal axis (LA) of the passage (37);
an index of refraction (IoR) sensor (55), the IoR sensor (55) disposed within the interior chamber (43) of the enclosure (40) such that the IoR sensor (55) is configured to detect total internal reflection light that reflects from the light path at the interface surface (75) and passes through the light-refracting surface (72) of the single use prism (30), the IoR sensor (55) being configured to generate an IoR signal indicative of the total internal reflection light the IoR sensor (55) detects;
wherein the light path diameter (D₂) being nominally equal to the passage radius (R₁).

2. The refractometer (20) according to claim 1, wherein the body (70) of the single use prism (30) is optically transmissive after the single use prism (30) is sterilized by being irradiated; optionally wherein the optically transmissive material comprises a polymer.

3. The refractometer (20) according to claim 1 or 2, wherein the light-accepting surface (71), the light-refracting surface (72), and the interface surface (75) of the body (70) of the single use prism (30) each has a surface finish value equal to or less than 0.1 Ra µm.

4. The refractometer (20) according to any one of claims 1 to 3, wherein the light emitted by the light source (50) comprises monochromatic wavelength light; optionally wherein the light source (50) comprises a monochromatic laser module adapted to emit a collimated laser beam.

5. The refractometer (20) according to any one of claims 1 to 4, wherein the single use prism (30) is removably disposed within the interior chamber (43) of the enclosure (40) such that the light source (50) is disposed in non-contacting relationship with the single use prism (30).

6. The refractometer (20) according to any one of claims 1 to 5, wherein the IoR sensor (55) comprises a linear optical array positioned substantially parallel to the light-refracting surface (72) of the single use prism (30).

7. The refractometer (120) according to any one of claims 1 to 6, wherein:
the enclosure (140) defines a prism opening (147) and first and second sample ports (148, 149), the prism opening (147) and the first and second sample ports (148, 149) in communication with the interior chamber (143),
the body (170) of the single use prism (130) includes first and second side surfaces (173, 174), the first and second side surfaces (173, 174) disposed in lateral spaced relationship to each other, the first and second side surfaces (173, 174) each including first and second side edges (195, 196; 197, 198), the light-accepting surface (171) extending between the first side edges (195, 196) of the first and second side surfaces (173, 174), and the light-refracting surface (172) extending between the second side edges (197, 198) of the first and second side surfaces (173, 174), the first and second side surfaces (173, 174) respectively defining first and second passage openings (177, 178), and
the single use prism (130) includes first and second fittings (191, 192) attached to the body (170) such that the first and second fittings (191, 192) are respectively mounted to the body (170) such that the first and second fittings (191, 192) are in respective communication with the first and second passage openings (177, 178), the first and second fittings (191, 192) being accessible from the exterior of the enclosure (140) via the first and second sample ports (148, 149).

8. The refractometer (20) according to any one of claims 1 to 7, further comprising:
a control unit (45), the control unit (45) including a processor (85) and a non-transitory computer readable medium (87) bearing an IoR program, the processor (85) being in electrical communication with the IoR sensor (55) to receive the IoR signal therefrom, the processor (85) programmed with the IoR program, the IoR program having a characteristic determination module configured to determine a value of a characteristic of a fluid passing through the passage (37) of the single use prism (30) based upon the IoR signal.

9. A method of using a refractometer (20; 120) according to any one of claims 1 to 8, the method comprising:
(i) removably installing the single use prism (30; 130) in the interior chamber (43; 143) of the enclosure (40; 140), the single use prism (30; 130) made from the optically transmissive material, the single use prism (30; 130) including the body (70; 170) having the light-accepting surface (71; 171), the light-refracting surface (72; 172), and the interface surface (75; 175), the light-accepting surface (71; 171) and the light-refracting surface (72; 172) being generally planar, the interface surface (75; 175) defining the generally cylindrical passage (37; 137) extending along the longitudinal axis (LA) though the body (70; 170);
(ii) passing a fluid through the passage (37; 137) of the single use prism (30; 130);
(iii) directing the light path (80) from within the interior chamber (43; 143) external to the single use prism (30; 130) through the light-accepting surface (71; 171) of the single use prism (30; 130) to the interface surface (75; 175), the light path (80) being substantially perpendicular to the longitudinal axis (LA) of the passage (37; 137);
(iv) detecting total internal reflection light from the light path that is reflected at the interface surface (75; 175) and passes through the light-refracting surface (72; 172) of the single use prism (30; 130);
(v) generating an IoR signal indicative of the total internal reflection light detected;
(vi) determining a value of a characteristic of the fluid based upon the IoR signal;
(vii) removing the single use prism (30; 130) from the enclosure (40; 140).

10. The method according to claim 9, the method further comprising:
prior to removably installing the single use prism (30; 130) in the interior chamber (43; 143) of the enclosure (40; 140), sterilizing the single use prism (30; 130) by irradiating the single use prism (30;130), the single use prism (30; 130) being optically transmissive after the single use prism (30; 130) is sterilized by being irradiated; optionally wherein the single use prism (30; 130) comprises a first single use prism (30; 130), the method further comprising:
sterilizing a second single use prism (30; 130) by irradiating the second single use prism (30; 130), the second single use prism (30; 130) being a separate component from the first single use prism (30; 130) but constructed in the same manner as the first single use prism (30; 130);
after being sterilized, removably installing the second single use prism (30; 130) in the interior chamber (43; 143) of the enclosure (40; 140);
repeating (ii)-(vii) of claim 14 with the second single use prism (30; 130).

## Patentansprüche

1. Refraktometer (20) für ein Einwegsystem, das Refraktometer (20) umfassend:
ein Gehäuse (40), wobei das Gehäuse (40) eine Innenkammer (43) definiert;
ein Einwegprisma (30), wobei das Einwegprisma (30) entfernbar innerhalb der Innenkammer (43) des Gehäuses (40) angeordnet ist, wobei das Einwegprisma (30) einen Körper (70) einschließt, der aus einem optisch durchlässigen Material gefertigt ist, wobei der Körper (70) eine lichtaufnehmende Oberfläche (71), eine lichtbrechende Oberfläche (72) und eine Grenzflächenoberfläche (75) einschließt,
wobei die lichtaufnehmende Oberfläche (71) und die lichtbrechende Oberfläche (72) im Wesentlichen eben sind, wobei die Grenzflächenoberfläche (75) einen im Wesentlichen zylindrischen Durchgang (37) definiert, der sich entlang einer Längsachse (LA) durch den Körper (70) erstreckt, wobei der Durchgang einen Durchgangsradius (R₁) aufweist;
eine Lichtquelle (50), wobei die Lichtquelle (50) innerhalb des Gehäuses (40) derart angeordnet ist, dass die Lichtquelle (50) dazu ausgebildet ist, selektiv Licht in einem Lichtweg (80) zu emittieren, der von einer Stelle außerhalb des Einwegprismas (30) ausgeht, wobei sich der Lichtweg (80) von der Lichtquelle (50) durch die lichtaufnehmende Oberfläche (71) des Einwegprismas (30) zur Grenzflächenoberfläche (75) erstreckt, wobei der Lichtweg (80) einen Wegdurchmesser (D₂) aufweist und im Wesentlichen senkrecht zur lichtaufnehmenden Oberfläche (71) und zur Längsachse (LA) des Durchgangs (37) ist;
einen Brechungsindexsensor (IoR-Sensor) (55), wobei der loR-Sensor (55) innerhalb der Innenkammer (43) des Gehäuses (40) derart angeordnet ist, dass der loR-Sensor (55) dazu ausgebildet ist, Totalreflexionslicht zu erfassen, das vom Lichtweg an der Grenzflächenoberfläche (75) reflektiert wird und durch die lichtbrechende Oberfläche (72) des Einwegprismas (30) hindurchgeht,
wobei der loR-Sensor (55) dazu ausgebildet ist, ein loR-Signal zu erzeugen, das das vom loR-Sensor (55) erfasste Totalreflexionslicht angibt;
wobei der Lichtwegdurchmesser (D₂) nominal gleich dem Durchgangsradius (R₁) ist.

2. Refraktometer (20) nach Anspruch 1, wobei der Körper (70) des Einwegprismas (30) optisch durchlässig ist, nachdem das Einwegprisma (30) durch Bestrahlung sterilisiert wurde; wobei optional das optisch durchlässige Material ein Polymer umfasst.

3. Refraktometer (20) nach Anspruch 1 oder 2, wobei die lichtaufnehmende Oberfläche (71), die lichtbrechende Oberfläche (72) und die Grenzflächenoberfläche (75) des Körpers (70) des Einwegprismas (30) jeweils einen Oberflächenrauheitswert von 0,1 Ra µm oder weniger aufweisen.

4. Refraktometer (20) nach einem der Ansprüche 1 bis 3, wobei das von der Lichtquelle (50) emittierte Licht Licht monochromatischer Wellenlänge umfasst; wobei optional die Lichtquelle (50) ein monochromatisches Lasermodul umfasst, das dazu eingerichtet ist, einen kollimierten Laserstrahl zu emittieren.

5. Refraktometer (20) nach einem der Ansprüche 1 bis 4, wobei das Einwegprisma (30) entfernbar innerhalb der Innenkammer (43) des Gehäuses (40) derart angeordnet ist, dass die Lichtquelle (50) berührungslos zum Einwegprisma (30) angeordnet ist.

6. Refraktometer (20) nach einem der Ansprüche 1 bis 5, wobei der loR-Sensor (55) eine lineare optische Anordnung umfasst, die im Wesentlichen parallel zur lichtbrechenden Oberfläche (72) des Einwegprismas (30) positioniert ist.

7. Refraktometer (120) nach einem der Ansprüche 1 bis 6, wobei:
das Gehäuse (140) eine Prismenöffnung (147) und einen ersten und einen zweiten Probenanschluss (148, 149) definiert, wobei die Prismenöffnung (147) und der erste und der zweite Probenanschluss (148, 149) mit der Innenkammer (143) in Verbindung stehen,
der Körper (170) des Einwegprismas (130) eine erste und eine zweite Seitenfläche (173, 174) einschließt, wobei die erste und die zweite Seitenfläche (173, 174) in lateral beabstandeter Beziehung zueinander angeordnet sind, wobei die erste und die zweite Seitenfläche (173, 174) jeweils eine erste und eine zweite Seitenkante (195, 196; 197, 198) einschließen, sich die lichtaufnehmende Oberfläche (171) zwischen den ersten Seitenkanten (195, 196) der ersten und der zweiten Seitenfläche (173, 174) erstreckt, und wobei sich die lichtbrechende Oberfläche (172) zwischen den zweiten Seitenkanten (197, 198) der ersten und der zweiten Seitenfläche (173, 174) erstreckt, wobei die erste und die zweite Seitenfläche (173, 174) eine erste bzw. eine zweite Durchgangsöffnung (177, 178) definieren, und
das Einwegprisma (130) ein erstes und ein zweites Anschlussstück (191, 192) einschließt, die derart an dem Körper (170) angebracht sind, dass das erste und das zweite Anschlussstück (191, 192) jeweils derart an dem Körper (170) montiert sind, dass das erste und das zweite Anschlussstück (191, 192) mit der ersten bzw. der zweiten Durchgangsöffnung (177, 178) in Verbindung stehen,
das erste und das zweite Anschlussstück (191, 192) über den ersten und den zweiten Probenanschluss (148, 149) von der Außenseite des Gehäuses (140) zugänglich sind.

8. Refraktometer (20) nach einem der Ansprüche 1 bis 7, weiter umfassend:
eine Steuereinheit (45), wobei die Steuereinheit (45) einen Prozessor (85) und ein nichtflüchtiges, computerlesbares Medium (87), das ein loR-Programm trägt, einschließt, wobei der Prozessor (85) in elektrischer Verbindung mit dem loR-Sensor (55) steht, um von diesem das loR-Signal zu empfangen,
wobei der Prozessor (85) mit dem loR-Programm programmiert ist, wobei das loR-Programm ein Modul zur Bestimmung einer Eigenschaft aufweist, das dazu ausgebildet ist, einen Wert einer Eigenschaft eines Fluids, das durch den Durchgang (37) des Einwegprismas (30) hindurchgeht, auf der Grundlage des loR-Signals zu bestimmen.

9. Verfahren zur Verwendung eines Refraktometers (20; 120) nach einem der Ansprüche 1 bis 8, das Verfahren umfassend:
(i) entfernbares Installieren des Einwegprismas (30; 130) in der Innenkammer (43; 143) des Gehäuses (40; 140), wobei das Einwegprisma (30; 130) aus einem optisch durchlässigen Material gefertigt ist, wobei das Einwegprisma (30; 130) den Körper (70; 170) einschließt, der die lichtaufnehmende Oberfläche (71; 171), die lichtbrechende Oberfläche (72; 172) und die Grenzflächenoberfläche (75; 175) aufweist, wobei die lichtaufnehmende Oberfläche (71; 171) und die lichtbrechende Oberfläche (72; 172) im Wesentlichen eben sind, wobei die Grenzflächenoberfläche (75; 175) einen im Wesentlichen zylindrischen Durchgang (37; 137) definiert, der sich entlang der Längsachse (LA) durch den Körper (70; 170) erstreckt;
(ii) Führen eines Fluids durch den Durchgang (37; 137) des Einwegprismas (30; 130);
(iii) Lenken des Lichtwegs (80) von innerhalb der Innenkammer (43; 143) und außerhalb des Einwegprismas (30; 130) durch die lichtaufnehmende Oberfläche (71; 171) des Einwegprismas (30; 130) zur Grenzflächenoberfläche (75; 175), wobei der Lichtweg (80) im Wesentlichen senkrecht zur Längsachse (LA) des Durchgangs (37; 137) ist;
(iv) Erfassen von Totalreflexionslicht vom Lichtweg, das an der Grenzflächenoberfläche (75; 175) reflektiert wird und durch die lichtbrechende Oberfläche (72; 172) des Einwegprismas (30; 130) hindurchgeht;
(v) Erzeugen eines loR-Signals, das das erfasste Totalreflexionslicht angibt;
(vi) Bestimmen eines Wertes einer Eigenschaft des Fluids auf der Grundlage des loR-Signals;
(vii) Entfernen des Einwegprismas (30; 130) aus dem Gehäuse (40; 140).

10. Verfahren nach Anspruch 9, das Verfahren weiter umfassend:
vor dem entfernbaren Installieren des Einwegprismas (30; 130) in der Innenkammer (43; 143) des Gehäuses (40; 140), Sterilisieren des Einwegprismas (30; 130) durch Bestrahlen des Einwegprismas (30; 130),
wobei das Einwegprisma (30; 130) optisch durchlässig ist, nachdem das Einwegprisma (30; 130) durch Bestrahlung sterilisiert wurde; wobei optional das Einwegprisma (30; 130) ein erstes Einwegprisma (30; 130) umfasst, das Verfahren weiter umfassend:
Sterilisieren eines zweiten Einwegprismas (30; 130) durch Bestrahlen des zweiten Einwegprismas (30; 130), wobei das zweite Einwegprisma (30; 130) eine vom ersten Einwegprisma (30; 130) getrennte Komponente ist, jedoch auf die gleiche Weise wie das erste Einwegprisma (30; 130) konstruiert ist;
entfernbares Installieren des zweiten Einwegprismas (30; 130) in der Innenkammer (43; 143) des Gehäuses (40; 140), nachdem dieses sterilisiert wurde;
Wiederholen (ii)-(vii) von Anspruch 14 mit dem zweiten Einwegprisma (30; 130).

## Revendications

1. Réfractomètre (20) destiné à un système à usage unique, le réfractomètre (20) comprenant :
une enceinte (40), l'enceinte (40) définissant une chambre intérieure (43) ;
un prisme (30) à usage unique, le prisme (30) à usage unique étant disposé de manière amovible dans la chambre intérieure (43) de l'enceinte (40), le prisme (30) à usage unique incluant un corps (70) fait en un matériau optiquement transmissif, le corps (70) incluant une surface (71) d'entrée de lumière, une surface réfractante (72) et une surface d'interface (75), la surface (71) d'entrée de lumière et la surface réfractante (72) étant, d'une manière générale, planaires, la surface d'interface (75) définissant un passage (37) de forme générale cylindrique s'étendant le long d'un axe longitudinal (LA) à travers le corps (70), ledit passage présentant un rayon de passage (R₁) ;
une source de lumière (50), la source de lumière (50) étant disposée dans l'enceinte (40) de sorte que la source de lumière (50) soit configurée de manière à émettre sélectivement de la lumière dans un chemin de lumière (80) émanant d'un emplacement externe au prisme (30) à usage unique, le chemin de lumière (80) s'étendant depuis la source de lumière (50) à travers la surface (71) d'entrée de lumière du prisme (30) à usage unique jusqu'à la surface d'interface (75), le chemin de lumière (80) présentant un diamètre de chemin (D₂) et étant sensiblement perpendiculaire à la surface (71) d'entrée de lumière et à l'axe longitudinal (LA) du passage (37) ;
un capteur d'indice de réfraction (IoR) (55), le capteur d'IoR (55) étant disposé dans la chambre intérieure (43) de l'enceinte (40) de sorte que le capteur d'IoR (55) soit configuré de manière à détecter une lumière de réflexion totale interne qui est réfléchie du chemin de lumière au niveau de la surface d'interface (75) et passe à travers la surface réfractante (72) du prisme (30) à usage unique, le capteur d'IoR (55) étant configuré de manière à générer un signal d'IoR indicateur de la lumière de réflexion totale interne que le capteur d'IoR (55) détecte ;
dans lequel le diamètre (D₂) du chemin de lumière est nominalement égal au rayon du passage (R₁).

2. Réfractomètre (20) selon la revendication 1, dans lequel le corps (70) du prisme (30) à usage unique est optiquement transmissif après que le prisme (30) à usage unique soit stérilisé en étant irradié ; dans lequel, facultativement, le matériau optiquement transmissif comprend un polymère.

3. Réfractomètre (20) selon la revendication 1 ou 2, dans lequel la surface (71) d'entrée de lumière, la surface réfractante (72) et la surface d'interface (75) du corps (70) du prisme (30) à usage unique présentent chacune une valeur de finition de surface égale à ou inférieure à 0,1 Ra µm.

4. Réfractomètre (20) selon l'une quelconque des revendications 1 à 3, dans lequel la lumière émise par la source de lumière (50) comprend une lumière monochromatique de longueur d'onde définie ; dans lequel, facultativement, la source de lumière (50) comprend un module laser monochromatique adapté à émettre un faisceau laser collimaté.

5. Réfractomètre (20) selon l'une quelconque des revendications 1 à 4, dans lequel le prisme (30) à usage unique est disposé de manière amovible dans la chambre intérieure (43) de l'enceinte (40) de sorte que la source de lumière (50) soit disposée selon une relation de non-contact avec le prisme (30) à usage unique.

6. Réfractomètre (20) selon l'une quelconque des revendications 1 à 5, dans lequel le capteur d'IoR (55) comprend une barrette optique linéaire positionnée sensiblement parallèle à la surface réfractante (72) du prisme (30) à usage unique.

7. Réfractomètre (120) selon l'une quelconque des revendications 1 à 6, dans lequel :
l'enceinte (140) définit une ouverture de prisme (147) et des premier et deuxième orifices d'échantillon (148, 149), l'ouverture de prisme (147) et les premier et deuxième orifices d'échantillon (148, 149) étant en communication avec la chambre intérieure (143),
le corps (170) du prisme (130) à usage unique inclut des première et deuxième surfaces latérales (173, 174), les première et deuxième surfaces latérales (173, 174) étant placées selon une relation d'espacement latéral l'une par rapport à l'autre, les première et deuxième surfaces latérales (173, 174) incluant chacune des premier et deuxième bords latéraux (195, 196 ; 197, 198), la surface (171) d'entrée de lumière s'étendant entre les premiers bords latéraux (195, 196) des première et deuxième surfaces latérales (173, 174), et la surface réfractante (172) s'étendant entre les deuxièmes bords latéraux (197, 198) des première et deuxième surfaces latérales (173, 174), les première et deuxième surfaces latérales (173, 174) définissant respectivement des première et deuxième ouvertures de passage (177, 178), et
le prisme (130) à usage unique inclut des premier et deuxième raccords (191, 192) attachés au corps (170) de sorte que les premier et deuxième raccords (191, 192) soient chacun montés sur le corps (170) afin que les premier et deuxième raccords (191, 192) soient en communication respective avec les première et deuxième ouvertures de passage (177, 178), les premier et deuxième raccords (191, 192) étant accessibles depuis l'extérieur de l'enceinte (140) via les premier et deuxième orifices d'échantillon (148, 149).

8. Réfractomètre (20) selon l'une quelconque des revendications 1 à 7, comprenant en outre :
une unité de commande (45), l'unité de commande (45) incluant un processeur (85) et un support non transitoire (87) lisible par ordinateur portant, un programme d'loR, le processeur (85) étant en communication électrique avec le capteur d'IoR (55) pour recevoir le signal d'IoR depuis celui-ci, le processeur (85) étant programmé avec le programme d'IoR, le programme d'IoR présentant un module de détermination de caractéristique configuré pour déterminer une valeur d'une caractéristique du fluide passant à travers le passage (37) du prisme (30) à usage unique sur la base du signal d'IoR.

9. Procédé d'utilisation d'un réfractomètre (20 ; 120) selon l'une quelconque des revendications 1 à 8, le procédé comprenant :
(i) l'installation de manière amovible le prisme (30 ; 130) à usage unique dans la chambre intérieure (43 ; 143) de l'enceinte (40 ; 140), le prisme (30 ; 130) à usage unique étant réalisé à partir de matériau optiquement transmissif, le prisme (30 ; 130) à usage unique incluant le corps (70 ; 170) présentant la surface (71 ; 171) d'entrée de lumière, la surface réfractante (72 ; 172) et la surface d'interface (75 ; 175), la surface (71 ; 171) d'entrée de lumière et la surface réfractante (72 ; 172) étant, d'une manière générale, planaires, la surface d'interface (75 ; 175) définissant le passage (37 ; 137) de forme générale cylindrique s'étendant selon l'axe longitudinal (LA) à travers le corps (70 ; 170) ;
(ii) le passage d'un fluide à travers le passage (37 ; 137) du prisme (30 ; 130) à usage unique ;
(iii) la conduite du chemin de lumière (80) depuis l'intérieur de la chambre intérieure (43 ; 143) externe au prisme (30 ; 130) à usage unique à travers la surface (71 ; 171) d'entrée de lumière du prisme (30 ; 130) à usage unique jusqu'à la surface d'interface (75 ; 175), le chemin de lumière (80) étant sensiblement perpendiculaire à l'axe longitudinal (LA) du passage (37 ; 137) ;
(iv) la détection d'une lumière de réflexion totale interne provenant du chemin de lumière qui est réfléchie au niveau de la surface d'interface (75 ; 175) et passe à travers la surface réfractante (72 ; 172) du prisme (30 ; 130) à usage unique ;
(v) la génération d'un signal d'IoR indicateur de la lumière de réflexion totale interne détectée ;
(vi) la détermination d'une valeur d'une caractéristique du fluide sur la base du signal d'IoR ;
(vii) le retrait du prisme (30 ; 130) à usage unique de l'enceinte (40 ; 140).

10. Procédé selon la revendication 9, le procédé comprenant en outre :
avant l'installation de manière amovible du prisme (30 ; 130) à usage unique dans la chambre intérieure (43 ; 143) de l'enceinte (40 ; 140), la stérilisation du prisme (30 ; 130) à usage unique en irradiant le prisme (30 ; 130) à usage unique, le prisme (30 ; 130) à usage unique étant optiquement transmissif après que le prisme (30 ; 130) à usage unique ait été stérilisé en étant irradié ; dans lequel, facultativement, le prisme (30 ; 130) à usage unique comprend un premier prisme (30 ; 130) à usage unique, le procédé comprenant en outre :
la stérilisation d'un deuxième prisme (30 ; 130) à usage unique en irradiant le deuxième prisme (30 ; 130) à usage unique, le deuxième prisme (30 ; 130) à usage unique étant un composant séparé du premier prisme (30 ; 130) à usage unique mais construit de la même manière que le premier prisme (30 ; 130) à usage unique ;
après avoir été stérilisé, l'installation de manière amovible le deuxième prisme (30 ; 130) à usage unique dans la chambre intérieure (43 ; 143) de l'enceinte (40 ; 140) ;
la répétition (ii)-(vii) de la revendication 14 avec le deuxième prisme (30 ; 130) à usage unique.
